# EUROPÄISCHE PATENTSCHRIFT

(11) **EP 0 894 617 B1**
(45) Veröffentlichungstag und Bekanntmachung des Hinweises auf die Patenterteilung: **01.10.2003**
(21) Anmeldenummer: 98250269.2
(22) Anmeldetag: 23.07.1998
(51) Int. Cl.: B32B 3/10, B60R 13/08, G10K 11/16, G10K 11/168

(54) **Mehrschichtiges Formteil und Verfahren zu seiner Herstellung**
Multilayer molded piece and method for manufacturing the same
Article multicouche moulé et procédé de fabrication

(30) Priorität: 02.08.1997 DE 29713779 U
(43) Veröffentlichungstag der Anmeldung: 03.02.1999
(73) Patentinhaber: SAI Automotive SAL GmbH, 76732 Wörth am Rhein (DE)
(72) Erfinder: Schuster, Dieter, Dr, 38524 Sassenburg (DE); Meyer, Roland, 38302 Wolfenbüttel (DE)
(74) Vertreter: Pfenning, Meinig & Partner

(56) Entgegenhaltungen:
- EP-A- 0 622 176
- US-A- 4 211 590
- US-A- 5 068 001

## Beschreibung

Die Erfindung betrifft ein mehrschichtiges Formteil gemäß dem Gattungsbegriff des Anspruchs 1 sowie ein Verfahren zu seiner Herstellung.

Derartige Formteile werden für Innenverkleidungen in Kraftfahrzeugen eingesetzt, vor allem im Bereich des Kofferraums. Als Bindemittel werden Duromere verwendet, vor allem Phenolharze. Aus der Vielzahl zusammenfassender Darstellungen dieses Standes der Technik sei genannt: Eisel, D. "Recyclate aus Reißbaumwolle und Phenoplast - ein bewährtes System", Melliand Textilberichte, 11/1992, Seiten 873 bis 878.

Wegen der geringen Verdichtung des Trägervlieses, das den Kern der Sandwich-Anordnung bildet, besitzen diese Formteile gute akustische Eigenschaften; ihre Steifigkeit läßt jedoch trotz der Sandwich-Struktur noch zu wünschen übrig, da das gering verdichtete Trägervlies "schubweich" ist, Schubkräfte also nur begrenzt übertragen kann und somit als Kern einer Sandwich-Konstruktion nicht ideal ist. Es ist daher seit längerem üblich, die Steifigkeit dieser Formteile, vor allem die Hutablagen, für die erhöhte Belastbarkeit gefordert wird, durch folgende Maßnahmen, meist in Kombination, zu verbessern:
- Einbringen von Verstärkungsfasern, beispielsweise Glasfasern, Flachsfasern oder auch höherfeste Kunstfasern, in das Trägervlies;
- Einbringen von metallischen Einlagen in das Trägervlies; und
- "hartes" Verpressen eines größeren Randbereiches, um dort durch größeren Randbereich, um dort durch größere Materialverdichtung mehr Steifigkeit zu gewinnen.

Das Einarbeiten von Verstärkungsfasern bedeutet jedoch einen größeren Fertigungsaufwand. Sofern es sich dabei um Naturfasern wie Flachs handelt, muß mit Geruchs-Emission gerechnet werden; Mineralfasern beeinträchtigen gegebenenfalls ein vorgesehenes Recycling. Gleiches gilt für Metalleinlagen, die sowohl einen erheblichen Mehraufwand in der Produktion als auch noch eine deutliche Gewichtszunahme der Formteile verursachen. Die branchenübliche Verwendung von Phenolharzen ist im Hinblick auf das Klima im Fahrzeuginnenraum bedenklich. Die Fahrzeugindustrie verlangt daher immer häufiger den Ersatz von Duromeren durch thermoplastische Bindemittel, nicht zuletzt auch mit Rücksicht auf eine bessere Recycling-Fähigkeit thermoplastischer Bindemittel.

Ein "hartes" Verpressen der Randbereiche ist nur dann wirksam, wenn diese Bereiche hinreichend groß gewählt werden. Üblicherweise umfassen sie mehr als ein Drittel der Formteilfläche. Für die Verbesserung der Innenraumakustik sind die "hart" verpreßten Formteilbereiche nicht mehr nutzbar.

Aufgabe der Erfindung ist es daher, die (Biege-)Steifigkeit gattungsgemäßer Mehrschichtformteile unter Verzicht auf Verstärkungseinlagen zu verbessern sowie die Recycling-Fähigkeit derartiger Formteile zu steigern. Aufgabe der Erfindung ist es weiterhin, den nicht zur Akustikverbesserung nutzbaren Flächenanteil zu minimieren. Aufgabe der Erfindung ist es schließlich auch, Fertigungsverfahren für derartige Teile anzugeben.

Für Mehrschichtformteile wird diese Aufgabe durch die Maßnahmen des kennzeichnenden Teils des Anspruchs 1 gelöst, die Ansprüche 2 bis 19 geben vorteilhafte Weiterbildungen hierzu an. Bezüglich der Herstellungsverfahren geben die Ansprüche 20 bis 23 Lösungen der Erfindungsaufgabe an.

Dadurch, daß das Trägervlies über die Fläche verteilt von prismenförmigen Bereichen durchgriffen wird, die gegenüber dem Trägervlies erhöhte Festigkeit besitzen und die mit den Deck- und/oder Dekorschichten des Formteils schubsteif verbunden sind, werden die Eigenschaften des Sandwiches unabhängig von dem Verpressungsgrad des Trägervlieses der Mittelschicht. Die Sandwich-Eigenschaften der Mehrschicht anordnung werden in dem für die Akustik-Eigenschaften wichtigen Bereich der geringverpreßten Trägervliese nur von Art, Werkstoff, Größe und Verteilung der prismatischen Bereiche bestimmt, deren Flächenbedarf deutlich geringer ist als der Flächenbedarf der hart verpreßten Formteilränder beim Stand der Technik.

Damit können die Festigkeitseigenschaften der Formteile weitgehend unabhängig von deren akustischen Kennwerten optimiert werden.

Grundsätzlich können erfindungsgemäße Formteile mit allen geeigneten Werkstoffen oder Werkstoffkombinationen realisiert werden. Beispielsweise ist Baumwolle als Faser für das Trägervlies heute üblich, andere Natur- oder Kunstfasern (oder entsprechende Mischungen solcher Fasern) erfüllen den vorgesehenen Zweck ebenso, da die geforderte Formsteifigkeit nicht mehr von Trägervlies abhängt. Versuche bestätigen dabei, daß die prismenförmigen Bereiche untereinander nicht verbunden sein müssen, um den vorgegebenen Festigkeitsforderungen zu genügen.

Die Wirkung der prismenförmigen Bereiche im fertigen Formteil hängt nicht nur von deren schubsteifer Anbindung an die Deckschichten ab, sondern auch von ihrer Biegefestigkeit, die durch die Querschnittsform dieser Bereiche mitbestimmt wird. Aus der Vielzahl der aus der Statistik bekannten günstigen Querschnittsformen ist ein sternförmiger Querschnitt für den vorgesehenen Zweck besonders günstig, wenn nicht ein rechteckförmiger Querschnitt gewählt wird, der besonders günstig dann ist, wenn das Verhältnis von Länge zu Breite größer als 30 : 1 ist und die Prismen näherungsweise in Richtung der Größtausdehnung des Formteils orientiert sind. Derartige prismenförmige Bereiche begünstigen nicht nur die Sandwich-Funktion, sie wirken zusätzlich noch als stabförmige Verstärkung gegen Biegungen.

Sind die prismenförmigen Bereiche erhöhter Festigkeit ungleichmäßig über die Formteilfläche verteilt, so kann dem Anforderungsspektrum an die Festigkeit des Formteils besser entsprochen werden, in der Regel bei vermindertem Material- und Gewichtsaufwand.

Günstige Formteile ergeben sich, wenn die Deck- und/oder Dekorschichten thermoplastisch verformbar sind, die Fasern des Trägervlieses thermoplastisch gebunden sind, und die das Trägervlies durchgreifenden prismenförmigen Bereiche erhöhter Festigkeit Thermoplast-Prismen sind.

Die Steifigkeitsverbesserung erfindungsgemäßer Formteile gestattet es dann, nicht nur auf Duromere als Bindemittel zu verzichten, sondern auch die benötigte Menge des Thermoplastbindemittels, das ersatzweise verwendet wird, wird im Normalfall 30 Gew.-% nicht überschreiten. In jedem Falle ist ein Anteil von 50 Gew.-% ausreichend, um auch extreme Anforderungen zu berücksichtigen. Wird das thermoplastische Bindemittel dem Trägervlies in Faserform zugegeben, so kann es schon bei der Vliesbildung entmischungssicher eingearbeitet werden, wodurch eine gute Homogenität des Trägervlieses sichergestellt ist. Da auch die Prismen aus einem Thermoplastmaterial bestehen, läßt sich bei Bedarf weitgehende Materialgleichheit realisieren und so das Recyclingverhalten der Formteile verbessern.

Beim heutigen Stand der Technik werden in vielen Fällen auch die Deck- und Dekorschichten materialgleich gestaltet werden können.

Eine weitere vorteilhafte Ausführung erfindungsgemäßer Formteile besteht darin, daß die prismenförmigen Bereiche erhöhter Festigkeit Bereiche sind, in denen das Trägervlies bei gleicher Dicke eine größere Verdichtung aufweist. Diese Variante ermöglicht es, langgestreckte Rechteckprismen mit einem Länge-/Breiteverhältnis von mindestens 30 : 1 zu schaffen, die nicht nur den Sandwich-Effekt des Schichtverbundes durch verbesserte Schubfestigkeit im Kernbereich verstärken, sondern sie mindern auch zusätzlich die Durchbiegung des Formteils unter Last, da sie selbst dann, wenn man den Sandwich-Effekt außer acht ließe, als versteifende Einlage wirken. Besonders günstig ist es dabei, daß die Formteildicke im Bereich der höheren Verdichtung beibehalten wird. Das Widerstandsmoment eines Rechteckquerschnitts wächst mit der dritten Potenz der Dicke, und das Styling wird nicht durch Querschnittsübergänge gestört. Dabei können die Verdichtungsbereiche zusätzliche, gegebenenfalls auch andere Fasern als das Trägervlies enthalten. Auch hier bietet der Stand der Technik eine Vielzahl von Werkstoffen an, so daß Gesichtspunkte der Gestaltung, der Festigkeit und der Recyclingfähigkeit berücksichtigt werden können. Die Verdichtungsbereiche können dabei 5 bis 25 Gew.-% Zusatzwerkstoff enthalten bezogen auf das Gewicht des Trägervlieses des Formteils. Es hat sich der Bereich von 10 bis 15 Gew.-% als besonders geeignet für ein ausgewogenes Verhältnis von Festigkeits- und Akustikeigenschaften erwiesen. Dabei besitzen dann die Verdichtungsbereiche eine 50 bis 120 % höhere Verdichtung als das Kernvlies (Trägervlies) des fertigen Formteils. Mit diesen Werten ist auch sichergestellt, daß der Flächenanteil der Verdichtungsprismen an der Gesamtfläche des Formteils 3 bis 30 %, vorzugsweise 8 bis 15 % beträgt, in jedem Falle also eine Verbesserung des Akustikverhaltens erzielbar ist, wobei das Formteil bei Flächengewichten von 2000 bis 3500 g/m² näherungsweise gleichmäßige Wanddicken von 6 bis 12 mm, vorzugsweise 8 bis 10 mm besitzt. Unter Flächengewicht is dabei das Gesamtgewicht des Formteils, bezogen auf seine Fläche zu verstehen.

Die Steifigkeitsverbesserung erfindungsgemäßer Formteile gestattet es nicht nur, frei von Duromeren als Bindemittel zu arbeiten; auch die benötigte Menge des Thermoplastbindemittels, das ersatzweise verwendet wird, wird im Normalfall 30 Gew.-% nicht überschreiten. In jedem Falle ist ein Anteil von 50 Gew.-% ausreichend, um auch extreme Anforderungen zu berücksichtigen. Wird das thermoplastische Bindemittel dem Trägervlies in Faserform zugegeben, so kann es schon bei der Vliesbildung entmischungssicher eingearbeitet werden, wodurch eine gute Homogenität des Trägervlieses auch bei der weiteren Verarbeitung sichergestellt ist. Bei Bauplatten zur Verbesserung der Raumakustik, die aus einem abgedeckten Faserkern bestehen, ist häufig die dem Raum zugewandte Deckschicht mit einem Lochmuster versehen, dessen Wirkungsweise bei einer Schalldämpfung bekannt ist (Durchtritt der Schallwellen in den offenporigen Faserstoff, Luftreibung in den Poren des Faserstoffs). Bei Bedarf ist eine derartige Maßnahme auch bei erfindungsgemäßen Formteilen möglich und vorteilhaft.

Die Sichtseite von Formteilen zur Verkleidung von Gepäckräumen in Fahrzeugen wird im allgemeinen von einem Teppichwerkstoff gebildet, der bei erfindungsgemäßen Formteilen direkt als Deckschicht genutzt werden kann. Als zweite Deckschicht dienen zweckmäßigerweise mechanisch, thermisch oder chemisch verfestigte Wirrfaservliese mit Flächengewichten von 50 bis 200 g/m². Die Deckschichten können zur Haftverbesserung auf ihrer dem Trägervlies zugewandten Seite mit Schmelzkleber beschichtet und/oder zur weiteren Verbesserung der Formteilsteifigkeit mit einer Thermoplastfolie verstärkt sein.

Zwei typische, für belastbare Hutablagen geeignete Mehrschicht-Strukturen erfindungsgemäßer Formteile seien nachstehend angegeben.

### Aufbau 1, Rezeptur mit Thermoplastprismen

Deckschicht, Sichtseite:
   Velourteppich-Material, verstärkt mit PP-Folie (0,1 bis 0,3 mm dick)
Deckschicht, Rückseite:
   Faservlies, PP, Flächengewicht > 50 g/m², verstärkt mit PP-Folie (0,1 bis 0,33 mm dick)
Trägervlies:
   Baumwollfasern, mit 25 bis 40 Gew.-% PP-Bindemittelfasern, Flächengewicht 1500 bis 2000 g/m², 100 bis 200 Löcher, 5 mm Durchmesser, gefüllt mit PP-Pulver bzw. Granulat
Formteile:
   Nach dem Verpressen: 10 bis 15 mm dick.

Die oberen und unteren Zahlenwerte (bzw. der damit eingegrenzte Bereich) berücksichtigen dabei Größenunterschiede der Formteile und unterschiedliche Belastungsanforderungen.

### Aufbau 2, Rezeptur mit Verdichtungsprismen

Deckschicht, Sichtseite:
   Velourteppich-Material, verstärkt mit PP-Folie (0,1 bis 0,3 mm dick)
Deckschicht, Rückseite:
   Faservlies, PP, Flächengewicht > 50 g/m², verstärkt mit PP-Folie (0,1 bis 0,3 mm dick)
Trägervlies:
   Zweilagig, Bauwollfasern mit 10 bis 50 Gew.-% PP-Bindefasern, wobei prismenförmige Bereiche größerer Verdichtung, bandförmig in Größtausdehnung des Formteiles orientiert, die Trägervlieslagen näherungsweise konstanter Dicke durchgreifen und mit den Deckschichten durch Klebung schubsteif verbunden sind.
Formteile:
   Nach dem Verpressen: 10 bis 15 mm dick.

Die oberen und unteren Zahlenwerte (bzw. der damit eingegrenzte Bereich) berücksichtigen dabei Größenunterschiede der Formteile und unterschiedliche Belastungsanforderungen.

Beide Rezepturen lassen sich mit einfachen Verfahrensweisen zu Formteilen verarbeiten. Für den Fall 1, bei dem eine Versteifung durch Thermoplastprismen angestrebt ist, durch ein Verfahren, bei dem ein Zuschnitt des Trägervlieses entsprechend den Querschnitten der prismenförmigen Bereiche größerer Festigkeit gelocht und dann auf dem entsprechenden Zuschnitt einer Deckschicht positioniert wird, bei dem danach die Löcher im Trägervlies mit Thermoplastgranulat und/oder Thermoplastpulver gefüllt werden, ehe eine zweite Deckschicht aufgebracht wird und das so erhaltene Verbundpaket über die Erweichungstemperatur der Thermoplastbestandteile erwärmt und abschließend in einem kalten Werkzeug unter leichter Verdichtung zum Formteil geformt und nach Erhärten durch Abkühlung dem Werkzeug entnommen wird.

In das vorgefertigte Trägervlies werden dort, wo die prismenförmigen Bereiche vorgesehen sind, Löcher gestanzt, die nach dem Aufbringen einer Deckschicht mit Thermoplastpulver oder Granulat gefüllt werden. So kann nach dem Aufbringen der zweiten Deckschicht der Gesamtverbund über die Erweichungstemperatur der Thermoplastbestandteile erwärmt und dann als Paket in einem kalten Werkzeug unter leichter Verdichtung geformt werden. Die Thermofüllung in den Löchern des Trägervlieses bildet dann nach dem Abkühlen die Verbindungsbereiche größerer Festigkeit zwischen den Deckschichten. Fertigungstechnisch vorteilhaft ist es dabei, den Schichtverbund komplett als Halbzeug vorzufertigen, was beispielsweise mit Hilfe von Schmelzkleber-Zwischenschichten durchgeführt werden kann.

Die Verdichtung während des Ausformens sorgt vorteilhafterweise für guten Druckkontakt zwischen den Verbindungspartnern und begünstigt die Kompaktierung der Thermoplastfüllung.

Im zweiten Fall ist ein Verfahren anwendbar, bei dem ein Zuschnitt des Trägervlieses auf einem entsprechenden Zuschnitt einer Deckschicht positioniert wird, bei dem dann im Bereich der vorgesehenen Verdichtungsprismen das Zusatzmaterial, und danach die zweite Deck- und/oder Dekorschicht aufgebracht wird, bei dem das so geschichtete Halbzeug mittels Kontaktheizung auf die Schmelztemperatur mindestens eines Teils der thermoplastischen Bindemittel erwärmt wird, und bei dem abschließend das erwärmte Halbzeug in einem kalten Werkzeug unter Verdichten zum Formteil geformt und nach Erhärten durch Abkühlung dem Werkzeug entnommen wird.

Eine vorteilhafte Weiterbildung dieser Vorgehensweise besteht darin, daß als Trägervlies zwei Vliesbahnen verwendet werden, deren Flächengewichte sich zu dem gewünschten Flächengewicht des Formteils ergänzen und daß das Zusatzmaterial der Verdichtungsbänder zwischen den beiden Vliesbahnen positioniert wird.

Bei dieser Weiterbildung ist eine Vorfertigung zu einem handhabungsfreundlichen Halbzeug besonders leicht zu verwirklichen.

Die Erfindung sei nunmehr anhand der in den Figuren 1 bis 6 dargestellten Ausführungsbeispiele näher erläutert.
- Fig. 1: zeigt einen Schnitt durch den Schichtaufbau eines erfindungsgemäßen Formteils.
- Fig. 2: zeigt einige zweckmäßige Querschnittsformen für die das Trägervlies durchgreifenden Verbindungsprismen, die vom Kreisquerschnitt abweichen.
- Fig. 3: erläutert in Draufsicht auf einen Trägervliesbereich die Anordnung der prismenförmigen Bereiche größerer Festigkeit.
- Fig. 4: gibt die Lage versteifender Rechteckprismen innerhalb der Kontur einer schematisch dargestellten Hutablage wieder, wobei die Rechteckprismen verdichtete Materialbereiche sind.
- Fig. 5: erläutert in vereinfachter Perspektive einen Materialausschnitt, dessen Lage in Fig. 4 durch den Schnitt A-A gekennzeichnet ist, und zwar vor der Ausformung zum Formteil.
- Fig. 6: schließlich zeigt den gleichen Materialausschnitt wie Fig. 5 nach dem Verpressen zum Formteil.

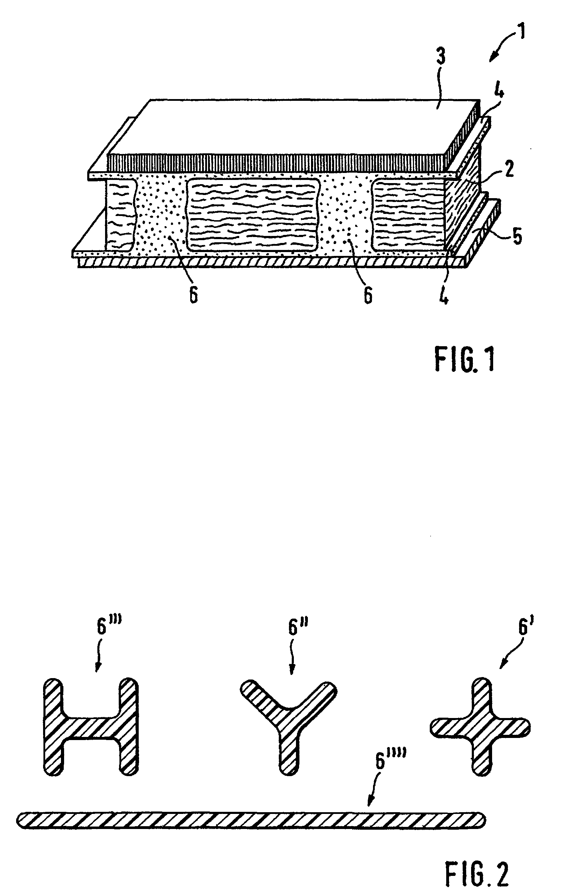

In Fig. 1 ist mit 1 ein Ausschnittsbereich des Formteils bezeichnet. Das mit der PP-Folie 4 verstärkte Teppichmaterial 3 bildet die sichtseitige Deckschicht, das Wirrfaservlies 5 bildet zusammen mit der verstärkenden PP-Folie 4' die rückseitige Deckschicht. Das Trägervlies 2, beispielsweise Baumwollfasern, verdichtet auf 0,3 bis 0,5 g/cm³ und in diesem Zustand durch PP-Bindefasern formstabilisiert, wird von den PP-Prismen 6 durchgriffen, die mit den beiden Deckschichten schubsteif verklebt sind.

In Fig. 2 sind einige andere Querschnittsformen von Verbindungsprismen 6',6" und 6"' aufgezeigt, die bezüglich einer schubsteifen Verbindung mit den Deckschichten günstige Voraussetzungen besitzen, vor allem für thermoplastgefüllte Prismen, wobei die Rechteckform 6"" gut für Versteifungsbänder mit Materialverdichtung geeignet ist.

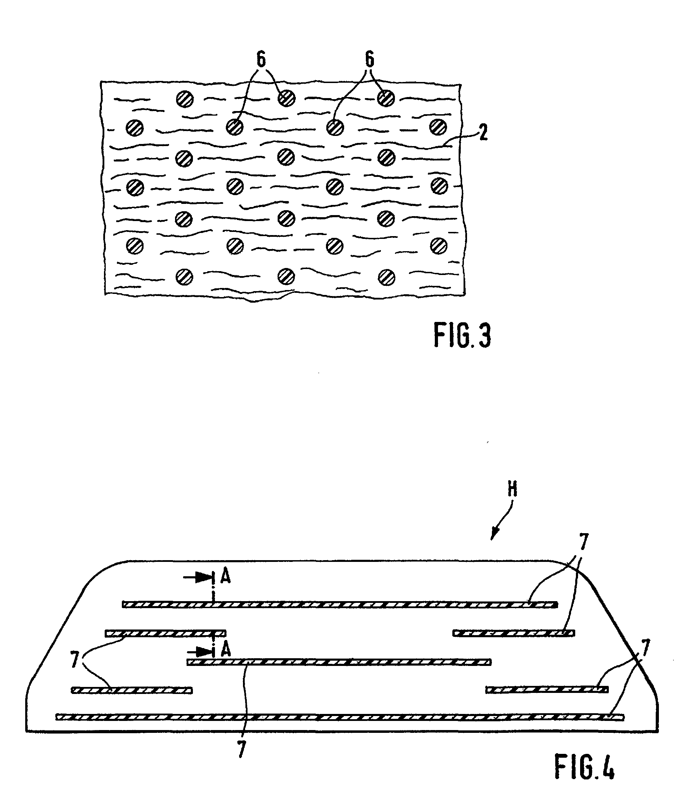

In Fig. 3 wird beispielsweise erläutert, und zwar anhand eines Horizontalabschnitts durch einen Materialbereich eines erfindungsgemäßen Formteils, wie sich die Prismen 6 über die Fläche verteilen, beispielsweise für Prismen mit Kreisquerschnitt.

Fig.4 zeigt die Lage von Versteifungsbändern 7 innerhalb des Umrisses einer mit H bezeichneten Hutablage, wobei die langgestreckten Verdichtungsbereiche in Richtung der Größtausdehnung der Hutablage H verlaufen.

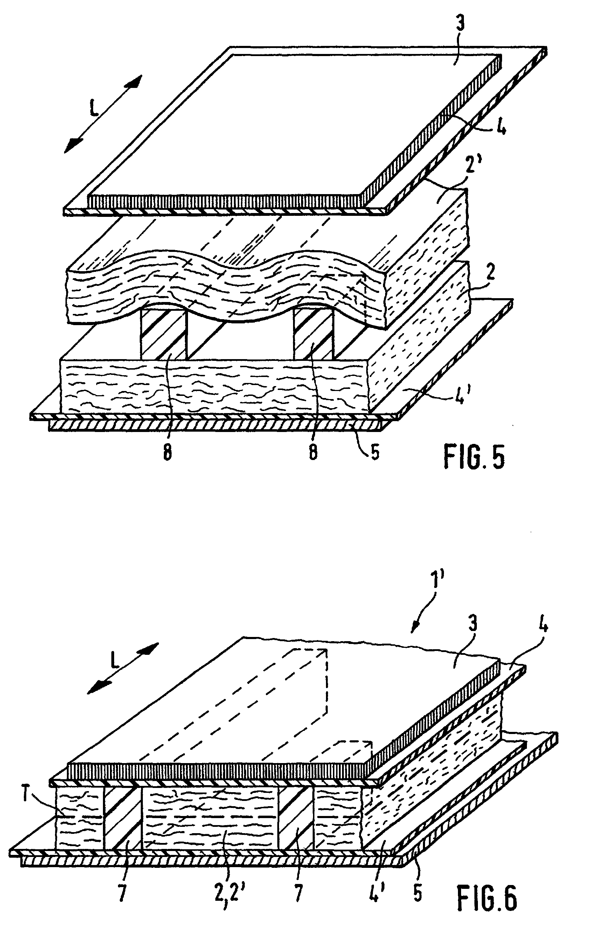

In Fig. 5 sind mit 2 und 2' die beiden Bahnen des Trägervlieses bezeichnet, zwischen denen der Zusatzwerkstoff 8 angeordnet ist. Die Lage des dargestellten Materialausschnitts entspricht dem Schnitt A-A in Fig. 4; es ist der Ausgangszustand vor dem Verpressen dargestellt, die Richtung der Größtausdehnung ist mit dem Doppelpfeil L angegeben.

Der gleiche Materialausschnitt ist in Fig. 6 im verpreßten Zustand dargestellt. Der Zusatzwerkstoff 8 ist mit den zugeordneten Bereichen der Trägervliese 2, 2' zu den Versteifungsbändern 7 verdichtet; eine Trennlinie T zwischen den Trägervliesen 2, 2' ist nur noch fiktiv, da in der Praxis die beiden Trägervliese 2, 2' materialeinheitlich miteinander verbunden sind.

## Patentansprüche

1. Mehrschichtiges Formteil mit akustischen Dämpfungseigenschaften, bestehend aus einem bindemittelhaltigen Trägervlies aus Natur- und/oder Kunstfasern geringer Verpressung, das beidseitig mit Deck- und/oder Dekorschichten abgedeckt ist,
**dadurch gekennzeichnet,**
**daß** das Trägervlies (2) über die Fläche verteilt von prismenförmigen Bereichen (6) an sich beliebigen Querschnittes durchgriffen wird, die erhöhte Festigkeit besitzen und untereinander nicht verbunden sind, und die mit den Deckund/oder Dekorschichten (3,5) schubsteif verbunden sind.

2. Formteil nach Anspruch 1, **dadurch gekennzeichnet, daß** die das Trägervlies (2) durchgreifenden Bereiche (6) erhöhter Festigkeit rechteckförmigen Querschnitt besitzen, wobei das Verhältnis von Länge zur Breite des Rechteckes größer als 30 ist, und die Mehrzahl der Rechteckprismen näherungsweise in Richtung der Größtausdehnung des Formteiles orientiert ist.

3. Formteil nach Anspruch 1, **dadurch gekennzeichnet, daß** die das Trägervlies (2) durchgreifenden prismenförmigen Bereiche (6) sternförmigen Querschnitt besitzen.

4. Formteil nach Anspruch 1, **dadurch gekennzeichnet, daß** die prismenförmigen Bereiche (6) erhöhter Festigkeit ungleichmäßig über die Formteilfläche verteilt sind.

5. Formteil nach Anspruch 1, **dadurch gekennzeichnet, daß** die Deck- und/oder Dekorschichten (3,5) thermoplastisch verformbar sind, daß die Fasern des Trägervlieses (2) thermoplastisch gebunden sind, und daß die das Trägervlies (2) durchgreifenden prismenförmigen Bereiche (6) erhöhter Festigkeit Thermoplast-Prismen sind.

6. Formteil nach Anspruch 1, **dadurch gekennzeichnet, daß** die prismenförmigen Bereiche erhöhter Festigkeit Bereiche sind, in denen das Trägervlies bei gleicher Dicke eine größere Verdichtung aufweist.

7. Formteil nach Anspruch 1 und 5, **dadurch gekennzeichnet, daß** zumindest das Bindemittel des Trägervlieses (2) und der Werkstoff der Thermoplast-Prismen (6) materialgleich sind.

8. Formteil nach Anspruch 1 und 6, **dadurch gekennzeichnet, daß** die Verdichtungsprismen zusätzliche und/oder andere Fasern enthalten als das Trägervlies.

9. Formteil nach Anspruch 1 und 6, **dadurch gekennzeichnet, daß** die Verdichtungsprismen 5 bis 25 %, vorzugsweise 10 bis 15 % Zusatzwerkstoff enthalten, bezogen auf das Gewicht des Trägervlieses des Formteils.

10. Formteil nach mindestens Anspruch 1 und 6, **dadurch gekennzeichnet, daß** die Verdichtungsprismen eine 50 bis 120 % größere Verdichtung besitzen als das Trägervlies.

11. Formteil nach mindestens Anspruch 1, **dadurch gekennzeichnet, daß** der Flächenanteil der Verdichtungsprismen an der Gesamtfläche des Formteils 3 bis 30 %, vorzugsweise 8 bis 15 % beträgt.

12. Formteil nach mindestens Anspruch 1, **dadurch gekennzeichnet, daß** das Formteil bei Flächengewichten von 2000 bis 3500 g/m2 näherungsweise gleichmäßige Wanddicken von 6 bis 12 mm, vorzugsweise 8 bis 10 mm besitzt.

13. Formteil nach mindestens einem der Ansprüche 1 bis 12, **dadurch gekennzeichnet, daß** der Bindemittelanteil des Trägervlieses (2) weniger als 50 Gew.-% beträgt, wobei das Bindemittel zumindest teilweise in Form von Bindefasern vorliegt.

14. Formteil nach mindestens Anspruch 1, **dadurch gekennzeichnet, daß** zumindest eine Deckschicht eine Lochung nach Art der an sich bekannten Akustikplatten aufweist.

15. Formteil nach mindestens Anspruch 1, **dadurch gekennzeichnet, daß** seine sichtseitige Deckschicht (3) ein Teppichmaterial und seine rückseitige Deckschicht (5) ein Vlieswerkstoff ist.

16. Formteil nach mindestens Anspruch 1, **dadurch gekennzeichnet, daß** die dem Trägervlies (2) zugewandte Fläche zumindest einer Deckschicht (3,5) mit Schmelzkleber beschichtet ist.

17. Formteil nach mindestens Anspruch 1, **dadurch gekennzeichnet, daß** zumindest eine Deckschicht (3,5) mit einer Thermoplast-Folie (4,4') verstärkt ist.

18. Formteil nach mindestens Anspruch 1, **gekennzeichnet durch** nachstehenden Schichtaufbau:
- Dekorschicht (3), Velourteppich-Material, mit 0,1 bis 0,3 mm PP-Folie (4) verstärkt,
- Trägervlies (2), Baumwollfasern mit 10 bis 50 Gew.-% PP-Bindefasern,
- rückseitige Deckschicht (5), Faservlies mit einem Flächengewicht > 50 g/m² aus Polypropylen- und/oder Polyesterfasern, verstärkt mit PP-Folie (4') (0,1 bis 0,33 mm dick), wobei die in einer Anzahl von 100 bis 200 per m² das Trägervlies durchgreifenden Prismen (6) aus Polypropylen bestehen und mit den Deckschichtten (3,4) und (5,4') schubfest verbunden sind.

19. Formteil nach mindestens Anspruch 1, **gekennzeichnet durch** nachstehenden Schichtaufbau:
- Dekorschicht (3), Velourteppich-Material, mit 0,1 bis 0,3 mm PP-Folie verstärkt,
- zweilagiges Trägervlies (2,2'), Baumwollfasern mit 10 bis 50 Gew.-% PP-Bindefasern,
- rückseitige Deckschicht (5), Faservlies mit einem Flächengewicht > 50 g/m² aus Polypropylen- und/oder Polyesterfasern, verstärkt mit PP-Folie (4'), 0,1 bis 0,3 mm dick, wobei prismenförmige Bereiche (7) größerer Verdichtung, bandförmig in Größtausdehnung des Formteils orientiert, die Trägervlieslagen (2,2') näherungsweise konstanter Dicke durchgreifen und mit den Deckschichten **durch** Klebung schubsteif verbunden sind.

20. Verfahren zum Herstellen von Formteilen nach Anspruch 1 und 5, bei dem ein Zuschnitt des Trägervlieses entsprechend den Querschnitten der prismenförmigen Bereiche größerer Festigkeit gelocht und dann auf dem entsprechenden Zuschnitt einer Deckschicht positioniert wird, bei dem danach die Löcher im Trägervlies mit Thermoplastgranulat und/oder Thermoplastpulver gefüllt werden, ehe eine zweite Deckschicht aufgebracht wird und das so erhaltene Verbundpaket über die Erweichungstemperatur der Thermoplastbestandteile erwärmt und abschließend in einem kalten Werkzeug unter leichter Verdichtung zum Formteil geformt und nach Erhärten durch Abkühlung dem Werkzeug entnommen wird.

21. Verfahren nach Anspruch 20, **dadurch gekennzeichnet, daß** die Deckschichten und das Trägervlies mit den thermoplastgefüllten Prismenlöcher als vorgefertigtes Halbzeug verwendet wird.

22. Verfahren zum Herstellen von Formteilen nach Anspruch 1 und 6, bei dem ein Zuschnitt des Trägervlieses auf einem entsprechenden Zuschnitt einer Deckschicht positioniert wird, bei dem dann im Bereich der vorgesehenen Verdichtungsprismen das Zusatzmaterial und danach die zweite Deck- und/oder Dekorschicht aufgebracht wird, und bei dem das so geschichtete Halbzeug mittels Kontaktheizung auf die Schmelztemperatur mindestens eines Teiles der thermoplastischen Bindemittel erwärmt wird und bei dem abschließend das erwärmte Halbzeug in einem kalten Werkzeug unter Verdichten zum Formteil geformt und nach Erhärten durch Abkühlung dem Werkzeug entnommen wird.

23. Verfahren nach Anspruch 22, **dadurch gekennzeichnet, daß** als Trägervlies zwei Vliesbahnen verwendet werden, deren Flächengewichte sich zu dem gewünschten Flächengewicht des Formteils ergänzen und daß das Zusatzmaterial der Verdichtungsbänder zwischen den beiden Vliesbahnen positioniert wird.

## Claims

1. Multi-layer moulded piece with acoustic dampening characteristics, consisting of a binding agent containing carrier fleece made from natural and/or synthetic fibres of low compression, whereby the same is covered on both sides with covering and/or decorative layers, **characterised in that** the carrier fleece (2) is intercepted across the entire surface of the same by prism-shaped areas (6) at random cross-sectional points of the same, whereby these incorporate an increased firmness and are not connected with one another, and whereby the same are bend-resistantly connected with the covering and/or decorative layers (3, 5).

2. Moulded piece according to Claim 1, **characterised in that** the carrier fleece (2) incorporates intersecting areas (6) with increased firmness and a rectangular cross-sectional profile, whereby the ratio of length to width of the said rectangular profile is larger than 30, and whereby the majority of the rectangular prism shapes are orientated in the direction of the area of maximum expansion of the moulded piece.

3. Moulded piece according to Claim 1, **characterised in that** the carrier fleece (2) incorporates intersecting prism-shaped areas (6) with a star-shaped cross-sectional profile.

4. Moulded piece according to Claim 1, **characterised in that** the prism-shaped areas (6) with increased firmness are distributed unevenly across the surface of the moulded piece.

5. Moulded piece according to Claim 1, **characterised in that** the covering and/or decorative layers (3, 5) can be re-shaped thermoplastically, so that the fibres of the carrier fleece (2) are thermoplastically bonded, and so that the prism-shaped areas (6) with increased firmness that intercept the carrier fleece (2) consist of thermoplastic prisms.

6. Moulded piece according to Claim 1, **characterised in that** the prism-shaped areas with increased firmness consist of areas in which the carrier fleece displays a greater density, but the same thickness.

7. Moulded piece according to Claims 1 and 5, **characterised in that** at least the binding agent of the carrier fleece (2) and the active substance of the thermoplastic prisms (6) consist of the same material.

8. Moulded piece according to Claim 1 and 6, **characterised in that** the compressed prisms incorporate additional and/or other fibres than the carrier fleece.

9. Moulded piece according to Claim 1 and 6, **characterised in that** the compressed prisms incorporate 5 to 25%, and preferably 10 to 15%, of the total weight of the carrier fleece of the moulded piece of an additional material.

10. Moulded piece according to at least one of the preceding Claims 1 and 6, **characterised in that** the compressed prisms display a density that is 50 to 120% greater than that of the carrier fleece.

11. Moulded piece according to at least Claim 1, **characterised in that** the proportion of the area of the compressed prisms constitutes approximately 3 to 30%, and preferably 8 to 15%, of the total area of the moulded piece.

12. Moulded piece according to at least Claim 1, **characterised in that** the moulded piece displays almost even wall thicknesses of 6 to 12mm, and preferably of 8 to 10mm, at area weights of 2000 to 3500 g/m².

13. Moulded piece according to at least one of the preceding Claims 1 to 12,
**characterised in that** the proportion of binding agent within the carrier fleece (2) represents less than 50 wt %, whereby the binding agent is present at least in part in the form of binding fibres.

14. Moulded piece according to at least Claim 1, **characterised in that** at least one covering layer incorporates a hole pattern of the type that is known to the expert from conventional acoustic plates.

15. Moulded piece according to at least Claim 1, **characterised in that** the visually accessible side of the covering layer (3) consists of a carpeting material, and **in that** the reverse side of the same covering layer (5) consists of a fleece material.

16. Moulded piece according to at least Claim 1, **characterised in that** the area that is orientated in the direction of the carrier fleece (2) is coated with at least one covering layer (3, 5) of a melt adhesive.

17. Moulded piece according to at least Claim 1, **characterised in that** at least one covering layer (3, 5) is reinforced with a thermoplastic film (4, 4').

18. Moulded piece according to at least Claim 1, **characterised in that** it displays the following layer construction:
- decorative layer (3) consisting of a velour carpeting material with 0,1 to 0.3 mm PP film (4) reinforcement,
- carrier fleece (2) consisting of cotton fibres with 10 to 50 wt % of PP binding fibres,
- reverse covering layer (5) consisting of fibre fleece with an area weight of > 50 g/m² made from polypropylene and/or polyester fibres, reinforced with PP film (4') (0,1 to 0,33 mm thick), whereby the prisms (6) that intersect the carrier fleece at a rate of 100 to 200 per m² consist of polypropylene and whereby the same are connected bend-resistantly with the covering layers (3,4) and (5, 4').

19. Moulded piece according to at least Claim 1, **characterised in that** it displays the following layer construction:
- decorative layer (3) consisting of a velour carpeting material with 0,1 to 0.3 mm PP film reinforcement,
- two-layered carrier fleece (2, 2') consisting of cotton fibres with 10 to 50 wt % of PP binding fibres,
- reverse covering layer (5) consisting of a fibre fleece with an area weight of > 50 g/m² made from polypropylene and/or polyester fibres, reinforced with PP film (4'), with a thickness of 0,1 to 0,3 mm, whereby prism-shaped areas (7) with a greater density, which are orientated in band shape in the direction of the greatest expansion of the moulded piece, intersect the carrier fleece layers (2, 2') with an almost constant thickness, and whereby the same are bend-resistantly connected with the covering layers through gluing.

20. Method for the manufacturing of moulded pieces according to Claims 1 and 5, whereby a cut-out of the carrier fleece that corresponds to the cross-sectional profiles of the prism-shaped areas with the greater firmness are first hole-punched and then positioned upon the relevant cut-out of a covering layer, whereafter the holes within the carrier fleece are filled with thermoplastic granules and/or thermoplastic powder, whereafter a second covering layer is applied, and whereby the bonded product produced in the above mentioned way is warmed to a temperature suitable for the melting of the thermoplastic components and subsequently and finally cooled with a cooling tool under light compression and formed into the moulded piece, whereafter the same is extracted from the said cooling tool following the hardening of the piece through cooling.

21. Method according to Claim 20, **characterised in that** the covering layers and the carrier fleece complete with the thermoplastically filled prism holes are supplied in the form of a ready-prepared precast piece.

22. Method for the manufacturing of moulded pieces according to Claim 1 and 6, whereby a cut-out of the carrier fleece is positioned upon a relevant cut-out of a covering layer, whereby first the additional material and then the second covering and/or decorative layer are affixed in the area of the envisaged compressed prisms, and whereby the layered precast produced in this way is heated to the melting temperature of at least part of the thermoplastic binding material with the aid of a contact heater, and whereby the warmed precast piece is subsequently and finally formed into the moulded piece within a cooling tool under compression, and whereby the same is extracted from the said cooling tool following the hardening of the piece through cooling.

23. Method according to Claim 22, **characterised in that** the carrier fleece consists of two fleece strips whose individual area weights total the desired area weight of the moulded piece, and **in that** the additional material of the compressed bands is positioned between the two fleece strips.

## Revendications

1. Article moulé multicouche possédant des propriétés d'amortissement acoustique, composé d'un support non-tissé contenant un liant réalisé à partir de fibres naturelles et/ou synthétiques de faible compression initiale, qui est recouvert des deux côtés de couches de recouvrement et/ou de décoration, **caractérisé en ce que** le support non-tissé (2) est pénétré de zones (6) en forme de prisme, réparties sur la surface, de section en soi quelconque, qui possèdent une résistance accrue et ne sont pas reliées entre elles, et qui sont reliées avec les couches de recouvrement et/ou de décoration (3, 5) d'une façon résistant à la poussée.

2. Article moulé selon la revendication 1, **caractérisé en ce que** les zones (6) pénétrant le non-tissé (2) possèdent une section rectangulaire de grande résistance, le rapport entre longueur et largeur du rectangle étant supérieur à 30, la pluralité de prismes rectangulaires étant orientée approximativement dans la direction de l'extension maximale de l'article moulé.

3. Article moulé selon la revendication 1, **caractérisé en ce que** les zones (6) en forme de prisme pénétrant le support non-tissé (2) possèdent une section en forme d'étoile.

4. Article moulé selon la revendication 1, **caractérisé en ce que** les zones (6) en forme de prisme de résistance accrue sont réparties de façon irrégulière sur la surface de l'article moulé.

5. Article moulé selon la revendication 1, **caractérisé en ce que** les couches de recouvrement et/ou de décoration (3, 5) sont déformables de façon thermoplastique, **en ce que** les fibres du support non-tissé (2) sont liées de façon thermoplastique et **en ce que** les zones (6) en forme de prisme pénétrant le support non tissé (2) et de résistance accrue sont des prismes thermoplastiques.

6. Article moulé selon la revendication 1, **caractérisé en ce que** les zones en forme de prisme sont des zones de résistance accrue dans lesquelles le support non-tissé, pour une même épaisseur, possède un pressage plus important.

7. Article moulé selon la revendication 1 et 5, **caractérisé en ce qu'**au moins le liant du support non-tissé (2) et le matériau des prismes thermoplastiques (6) sont en un même matériau.

8. Article moulé selon la revendication 1 et 6, **caractérisé en ce que** les prismes de pressage contiennent des fibres supplémentaires et/ou d'autres fibres par rapport au support non-tissé.

9. Article moulé selon la revendication 1 et 6, **caractérisé en ce que** les prismes de pressage contiennent 5 à 25 %, de préférence 10 à 15 % de matériau supplémentaire, sur la base de la masse du support non-tissé de l'article moulé.

10. Article moulé selon au moins la revendication 1 et 6, **caractérisé en ce que** les prismes de pressage possèdent un pressage 50 à 120 % supérieur à celui du support non-tissé.

11. Article moulé selon au moins la revendication 1, **caractérisé en ce que** la fraction de surface des prismes de pressage sur la surface totale de l'article moulé est de 3 à 30 %, de préférence de 8 à 15 %.

12. Article moulé selon au moins la revendication 1, **caractérisé en ce que** l'article moulé possède, pour un grammage de 2 000 à 3 500 g/m², des épaisseurs de parois approximativement régulières comprises entre 6 et 12 mm, de préférence entre 8 et 10 mm.

13. Article moulé selon au moins l'une des revendications 1 à 12, **caractérisé en ce que** la fraction de liant du support non-tissé (2) est inférieure à 50 % en masse, le liant se présentant au moins partiellement sous la forme de fibres de liage.

14. Article moulé selon au moins la revendication 1, **caractérisé en ce qu'**au moins une couche de recouvrement possède une perforation du type d'un panneau acoustique connu en soi.

15. Article moulé selon au moins la revendication 1, **caractérisé en ce que** sa couche de recouvrement (3) côté visible est un matériau pour tapis et sa couche de recouvrement arrière (5) est un matériau non-tissé.

16. Article moulé selon au moins la revendication 1, **caractérisé en ce que** la surface orientée vers le support non-tissé (2) est revêtue d'au moins une couche de recouvrement (3, 5) avec une colle fusible.

17. Article moulé selon au moins la revendication 1, **caractérisé en ce qu'**au moins une couche de recouvrement (3, 5) est renforcée par une feuille thermoplastique (4, 4').

18. Article moulé selon au moins la revendication 1, **caractérisé par** la structure de couches suivante :
- couche de décoration (3), matériau pour tapis en velours, renforcé par une feuille de PP (4) de 0,1 à 0,3 mm,
- support non-tissé (2), fibres de coton avec 10 à 50 % en masse de fibres de liage en PP,
- couche de recouvrement arrière (5), non-tissé de fibres présentant un grammage > 50 g/m² en fibres de polypropylène et/ou de polyester, renforcé par une feuille (4') de PP (épaisseur 0,1 à 0,33 mm),
où les prismes (6) pénétrant le support non-tissé, d'un nombre compris entre 100 et 200 par m², se composent de polypropylène et sont reliés aux couches de recouvrement (3, 4) et (5, 4') d'une façon qui résiste à la poussée.

19. Article moulé selon au moins la revendication 1, **caractérisé par** la structure de couches suivante :
- couche de décoration (3), matériau pour tapis en velours, renforcée par une feuille de PP de 0,1 à 0,3 mm,
- support non-tissé à deux couches (2, 2'), fibres de coton avec 10 à 50 % en masse de fibres de liage en PP,
- couche de recouvrement arrière (5), non-tissé de fibres présentant un grammage > 50 g/m² en fibres de polypropylène et/ou de polyester, renforcée par une feuille (4') de PP, d'épaisseur comprise entre 0,1 et 0,3 mm,
où les zones en forme de prismes (7) de plus grand pressage, orientées en bandes selon l'expansion maximale de l'article moulé, pénètrent les couches du support non-tissé (2, 2') d'épaisseur approximativement constante et sont reliées par collage aux couches de recouvrement d'une façon qui résiste à la poussée.

20. Procédé de fabrication d'articles moulés selon la revendication 1 et 5, dans lequel une pièce découpée du support non-tissé est perforée conformément aux sections des zones en forme de prisme de résistance accrue, puis placée sur la pièce découpée correspondante d'une couche de recouvrement, dans lequel, après que les trous du support non-tissé sont remplis de granulés thermoplastiques et/ou de poudre thermoplastique, on applique alors une seconde couche de recouvrement, et le composite ainsi obtenu est chauffé au-delà de la température de ramollissement des composants thermoplastiques, puis façonné en article moulé dans un outil froid sous légère compression, et retiré de l'outil après durcissement par refroidissement.

21. Procédé selon la revendication 20, **caractérisé en ce que** les couches de recouvrement et le support non-tissé comportant les perforations en forme de prismes remplis de matériau thermoplastique sont utilisés en tant que produits semi-finis préfabriqués.

22. Procédé de fabrication d'articles moulés selon la revendication 1 et 6, dans lequel une pièce découpée du support non-tissé est placée sur une pièce découpée correspondante d'une couche de recouvrement, dans lequel on applique ensuite le matériau supplémentaire dans la zone des prismes de pressage prévus puis la seconde couche de recouvrement et/ou de décoration, et dans lequel le produit semi-fini ainsi recouvert est chauffé, au moyen d'un chauffage par contact, à la température de fusion. d'au moins une partie du liant thermoplastique, et dans lequel ensuite, le produit semi-fini chauffé est façonné en article moulé dans un outil froid, sous compression, puis retiré de l'outil après durcissement par refroidissement.

23. Procédé selon la revendication 22, **caractérisé en ce que** l'on utilise en tant que support non-tissé deux bandes de non-tissé dont le grammage se complète selon le grammage souhaité de l'article moulé et **en ce que** le matériau supplémentaire des bandes de pressage est placé entre les deux bandes de non-tissé.
